# EUROPÄISCHE PATENTSCHRIFT

(11) **EP 4 670 873 B1**
(45) Veröffentlichungstag und Bekanntmachung des Hinweises auf die Patenterteilung: **04.11.2026**
(21) Anmeldenummer: 24185485.0
(22) Anmeldetag: 28.06.2024
(51) Int. Cl.: B22F 10/22, B22F 10/38, B22F 10/85, B29C 64/112, B29C 64/393, B33Y 10/00, B33Y 50/02

(54) **VERFAHREN ZUM GENERIEREN EINES STEUERUNGSDATENSATZES FÜR EINE TROPFENBASIERTE ADDITIVE FERTIGUNG SOWIE VERFAHREN UND VORRICHTUNG ZUR ADDITIVEN FERTIGUNG**
METHOD FOR GENERATING A CONTROL DATASET FOR DROPLET-BASED ADDITIVE MANUFACTURING, AND METHOD AND DEVICE FOR ADDITIVE MANUFACTURING
PROCÉDÉ DE GÉNÉRATION D'UN ENSEMBLE DE DONNÉES DE COMMANDE POUR UNE FABRICATION ADDITIVE À BASE DE GOUTTELETTES AINSI QUE PROCÉDÉ ET DISPOSITIF DE FABRICATION ADDITIVE

(43) Veröffentlichungstag der Anmeldung: 31.12.2025
(73) Patentinhaber: Grob-Werke GmbH & Co. KG, 87719 Mindelheim (DE)
(72) Erfinder: Otter, Martin, 87700 Memmingen (DE); Leusch, Oliver, 86159 Augsburg (DE); Dropmann, Maximilian, 87600 Kaufbeuren (DE); Glasschröder, Johannes, 86356 Neusäß (DE); Miklec, Christian, 86825 Bad Wörishofen (DE); Lang, Andreas, 86833 Ettringen (DE); Engelsberger, Emanuel, 87776 Sontheim (DE); Schweiger, Matthias, 87665 Mauerstetten (DE)
(74) Vertreter: KASTEL Patentanwälte PartG mbB

(56) Entgegenhaltungen:
- WO-A1-2020/198038
- US-A1- 2022 234 110

## Beschreibung

Die Erfindung betrifft ein computerimplementiertes Verfahren zum Generieren eines Steuerungsdatensatzes zur Steuerung eines Druckkopfes bei einer tropfenbasierten additiven Fertigung eines Bauteils. Weiter betrifft die Erfindung ein Verfahren zur additiven schichtweisen Fertigung eines Bauteils, bei dem ein so generierter Steuerungsdatensatz zum Einsatz kommt. Weiter betrifft die Erfindung eine zum Durchführen eines solchen Verfahrens zum Generieren von Steuerungsdatensätzen eingerichtete Datenverarbeitungsvorrichtung, ein Computerprogramm mit Anweisungen zum Durchführen des Verfahrens zum Generieren, eine Steuerung für eine Vorrichtung zur additiven Fertigung und eine mit einer solchen Steuerung versehene Vorrichtung zur additiven Fertigung.

Die Erfindung liegt auf dem Gebiet der additiven Fertigung und insbesondere auf dem Gebiet der tropfenbasierten additiven Fertigung. Bevorzugte Ausführungsformen betreffen computerimplementierte Verfahren und entsprechende Computerprogramme zur Generierung von Steuerungsdatensätzen, mit denen das Verfahren zur additiven Fertigung gesteuert wird. Derartige Computerprogramme werden auch als "Slicer" bezeichnet.

Zum technologischen Hintergrund wird auf folgende Literaturstellen verwiesen:
[1] DE 10 2019 128 068 A1
[2] DE 10 2020 104 296 A1
[3] DE 10 2021 115 821 A1
[4] DE 10 2021 116 623 A1
[5] DE 10 2021 117 285 A1
[6] WO 2022/161764 A1
[7] EP 3 556 543 B1
[8] WO 2020/198038 A1
[9] EP 4 282 560 A1
[10] EP 3 800 539 A1

Die Literaturstellen [1] bis [6] betreffen Vorrichtungen und Verfahren zur additiven Fertigung, insbesondere zu einer tropfenbasierten additiven Fertigung, sowie Einzelheiten hierzu. Insbesondere beschreibt die Literaturstelle [6] Verfahren und Vorrichtungen zur schichtweisen Fertigung von Bauteilen. Darin wird neben den Grundlagen von besonders gut auch zur Verwendung in Ausführungsformen der Erfindung geeigneten Anlagen zur additiven Fertigung im Besonderen auf die allgemeinen Strategien des Slicers eingegangen.

Die Literaturstelle [7] beschreibt einen grundlegenden Ansatz eines Slicers für ein Tintenstrahlverfahren zur Berechnung der Tropfenpositionen für das schichtweise Erzeugen seines Bauteils. Die Literaturstelle [8] beschreibt eine Best-Fit-Strategie zur Bahnberechnung eines tropfenbasierten 3D-Druckverfahrens. Die Literaturstelle [9] beschreibt ein Verfahren, in dem aus gemessenen Informationen eines optischen Messsystems eine Verstärkungskarte der Bauteiloberfläche berechnet wird und ein Offset errechnet wird, mit dem Bauteile mit Überhang gedruckt werden. Die Literaturstelle [10] beinhaltet eine Kompensationsverfahren. Mit einem optischen Messsystem wird während des Druckprozesses eine IST-Geometrie des Bauteils aufgenommen und mit einer SOLL-Geometrie verglichen. Dadurch können lokale Defekte detektiert und durch Anpassung der Prozessparameter kompensiert werden.

Problematisch bei bisherigen tropfenbasierten additiven Fertigungen ist, dass Bauteile mit variablen Schichtdicken über der Bauteilhöhe, speziell solche mit Überhängen, nur mit größerem Aufwand, wie z.B. Stützstrukturen, oder mit Qualitätsverlusten gedruckt werden können.

Die Erfindung hat sich zur Aufgabe gestellt, Möglichkeiten zu schaffen, mit denen Bauteile mit Überhängen oder sonstigen variablen Schichtdicken über der Bauteilhöhe, aber auch Bauteile mit gleichbleibender Schichtdicke mit hoher Qualität und geringem wirtschaftlichen Aufwand in tropfenbasierter additiver Fertigung gefertigt werden können.

Zum Lösen dieser Aufgabe schafft die Erfindung ein computerimplementiertes Verfahren zum Generieren eines Steuerungsdatensatzes zur Steuerung eines Druckkopfes nach Anspruch 1. Ein Verfahren zur additiven Fertigung unter Einsatz eines solchen Steuerungsdatensatz-Generier-Verfahrens, eine zum Durchführen des Steuerungsdatensatz-Generier-Verfahrens eingerichtete Vorrichtung zur Datenverarbeitung, ein entsprechendes Computerprogramm und eine entsprechend eingerichtete Steuerung sowie eine damit versehene Vorrichtung zur additiven Fertigung sind Gegenstand der Nebenansprüche.

Vorteilhafte Ausgestaltungen sind Gegenstand der Unteransprüche.

Die Erfindung schafft gemäß einem Aspekt davon ein computerimplementiertes Verfahren zum Generieren eines Steuerungsdatensatzes zur Steuerung eines Druckkopfes bei einer tropfenbasierten additiven Fertigung eines Bauteils, welches eine Wandstärke aufweist, die über der Bauteilhöhe variabel sein kann, so dass jede additiv zu fertigende Schicht des Bauteils eine Schichtbreite s aufweist, wobei der Steuerungsdatensatz für jede Schicht einen Tropfenabstand dT, mit der Tropfen bei der tropfenbasierten additiven Fertigung mit einem Tropfendurchmesser D entlang von Linien abgegeben werden, einen Linienabstand dL, der den Abstand der Linien angibt und eine Schichthöhe dZ enthält, mit den Schritten:
a) Berechnen einer theoretischen Anzahl xₜₕ an Bahnen aus dem Quotienten zwischen der Schichtbreite s und einem vorbestimmten Soll-Linienabstand dL_{O} mit ${x}_{th} = \frac{s}{{dL}_{O}}$ mit anschließendem Aufrunden des Wertes xₜₕ auf die nächsthöhere natürliche Zahl, um eine aufgerundete Anzahl x_{auf} zu erhalten, und Abrunden des Wertes des Quotienten auf die nächstliegende tiefere natürliche Zahl, um eine abgerundeten Anzahl x_{ab} zu erhalten;
b) Berechnen eines ersten Datensatzes von Linienabstand dL, Tropfenabstand dT und Schichtdicke dZ basierend auf der aufgerundeten Anzahl X_{auf},
c) Berechnen eines zweiten Datensatzes von Linienabstand dL, Tropfenabstand dT und Schichtdicke dZ basierend auf dem abgerundeten Wert, x_{ab} und
d) Vergleich der Werte des ersten und zweiten Datensatzes mit abhängig von dem Bauteil vorbestimmten Sollwerten dL_{O}, dT_{O} und dZ_{O} und Auswahl des ersten oder zweiten Datensatzes als Steuerdatensatz basierend auf diesem Vergleich.

Bei einigen Ausführungsformen ist vorgesehen, dass der Linienabstand berechnet wird mit ${dL}_{suf} = \frac{s}{{x}_{suf}}$, wobei das Suffix suf für "auf" bei dem ersten Datensatz und "ab" für den zweiten Datensatz steht.

Bei einigen Ausführungsformen ist vorgesehen, dass der Tropfenabstand berechnet wird mit *dT_{suf} = kTL - dL_{suf},* wobei kTL eine vorbestimmte Konstante ist.

Bei einigen Ausführungsformen ist vorgesehen, dass die Schichtdicke dZ ein vorbestimmter konstanter Wert ist.

Bei einigen Ausführungsformen ist vorgesehen, dass die Schichtdicke dZ aus der Beziehung *dZ_{suf}* × *dT_{suf}* × *dL_{suf}* = C bestimmt wird, wobei C eine vorbestimmte Konstante ist.

Bei einigen Ausführungsformen enthält Schritt d):
d1) Auswahl desjenigen Datensatzes, dessen Summe der Beträge der Abweichungen von den vorbestimmten Sollwerten minimal ist.

Die Werte des Steuerungsdatensatzes können in jeder zur Steuerung der additiven Fertigung, insbesondere zur Bewegung des Druckkopfes, geeigneten Form berechnet oder angegeben werden. Beispielsweise können sie als Absolutwerte mit Längendimension in dem jeweiligen Koordinatensystem der Fertigungsanlage angegeben werden. Insbesondere hat sich bewährt, wenn die Werte auf den jeweiligen Tropfendurchmesser D normiert angegeben werden. Bei einigen Ausführungsformen ist demnach vorgesehen, dass die Werte dZ, dT und dL als Faktoren berechnet werden, wobei sich absolute Werte durch Multiplikation mit dem Tropfendurchmesser D ergeben. Insbesondere können auch die Sollwerte als Faktoren angegeben werden, die mit dem Tropfendurchmesser D mal zu nehmen sind. Bei einigen Ausführungsbeispielen, die hiernach noch näher erläutert werden wird zum Beispiel dL₀ als das Produkt "optimales dL * Tropfendurchmesser D" angegeben.

Bei einigen Ausführungsformen, bei denen die Werte als auf den Tropfendurchmesser D normierte Werte angegeben werden, ist vorgesehen, dass gilt $C = \frac{π}{6}$.

Bei einigen Ausführungsformen ist der Tropfendurchmesser D ein vorbestimmter konstanter Tropfendurchmesser.

Bei einigen Ausführungsformen ist der Tropfendurchmesser D variabel.

Bei einigen Ausführungsformen wird der Tropfendurchmesser D variabel ausgewählt aus einem ersten Tropfendurchmesser und einem sich von dem ersten Tropfendurchmesser unterscheidenden zweiten Tropfendurchmesser.

Bei einigen Ausführungsformen ist vorgesehen, dass die Schichtdicke dZ abhängig von dem variablen Tropfendurchmesser berechnet wird.

Gemäß einem weiteren Aspekt schafft die Erfindung ein Verfahren zur additiven schichtweisen Fertigung eines Bauteils, welches eine Wandstärke aufweist, die über der Bauteilhöhe variabel sein kann, durch tropfenweises Aufbringen eines flüssigen Materials mittels eines Druckkopfes, umfassend:
Generieren von Steuerungsdatensätzen für Schichten des Bauteils mittels eines Verfahrens nach einem der voranstehenden Ausgestaltungen und Steuern des Druckkopfes mittels der generierten Steuerungsdatensätze.

Gemäß einem weiteren Aspekt schafft die Erfindung eine Vorrichtung zur Datenverarbeitung, umfassend Mittel zur Ausführung des Verfahrens zur Generierung von Steuerungsdatensätzen nach einem der voranstehenden Ausgestaltungen.

Gemäß einem weiteren Aspekt schafft die Erfindung ein Computerprogramm umfassend Befehle, die bei der Ausführung des Programms durch einen Computer diesen veranlassen, das Verfahren zur Generierung von Steuerungsdatensätzen nach einer der voranstehenden Ausgestaltungen auszuführen.

Gemäß einem weiteren Aspekt schafft die Erfindung eine computerimplementierte Steuerung für eine Vorrichtung zur additiven Fertigung eines Bauteils, die einen Druckkopf zum tropfenweisen Aufbringen flüssigen Materials und einen Bewegungsmechanismus zur relativen Bewegung des Druckkopfs und des zu fertigenden Bauteils aufweist, wobei die Steuerung dazu ausgebildet ist, die Vorrichtung zum Durchführen des Verfahrens zur additiven Fertigung gemäß einer der voranstehenden Ausgestaltungen anzusteuern.

Insbesondere weist die Steuerung einen Prozessor und einen Speicher auf, in dem das Computerprogramm gemäß der zuvor erläuterten Ausgestaltung gespeichert ist.

Gemäß einem weiteren Aspekt schafft die Erfindung eine Vorrichtung zur additiven Fertigung eines Bauteils, umfassend einen Druckkopf zum tropfenweisen Aufbringen flüssigen Materials, einen Bewegungsmechanismus zur relativen Bewegung des Druckkopfs und des zu fertigenden Bauteils und eine Steuerung, die dazu ausgebildet ist, die Vorrichtung zum Durchführen des additiven Fertigungsverfahrens gemäß der voranstehenden Ausgestaltung anzusteuern. Insbesondere ist die Steuerung gemäß der zuvor genannten Ausgestaltung ausgebildet.

Vorteilhafte Ausgestaltungen der Erfindung betreffen ein "Dynamic-Skin"-Verfahren zur Bahnberechnung des Druckvorgangs von additiv hergestellten Bauteilen.

Insbesondere schaffen vorteilhafte Ausgestaltungen der Erfindung ein Verfahren "Dynamic Skin", welches eine Berechnungsgrundlage zur Bahnberechnung für 3D-Druck-Anlagen mit einem tropfenbasierten Druckverfahren beschreibt, das bei der additiven Herstellung von Bauteilen mit variabler Wandstärke zum Einsatz kommt.

Einige Ausführungsformen betreffen eine Methode zur Berechnung der Bahnbewegung zur additiven Fertigung eines Bauteils mit dünnwandigen Geometrien oder Flächen mit Down- oder Upskin durch ein tropfenbasiertes Verfahren mittels eines Druckkopfs mit dem folgenden Vorgehen:
- Berechnung einer theoretischen Anzahl an Bahnen aus dem Quotienten zwischen radialer Schichtbreite und optimalem Linienabstand mit anschließendem Aufrunden und Abrunden dieses Wertes,
- Berechnung jeweils eines realen Linienabstands dL aus diesen beiden Ergebnissen,
- Berechnung jeweils eines Tropfenabstands dT nach der Regel
   o Summe der Faktoren Tropfenabstand dT und Linienabstand dL ergeben einen konstanten Wert,
- Berechnung jeweils einer Schichthöhe dZ, die multipliziert mit den beiden Faktoren Tropfenabstand dT und Linienabstand dL einen konstanten Wert ergibt,
- mit finaler Fallentscheidung, bei der die Summe der Abweichungen der jeweils berechneten Faktoren des auszuwählenden Falls minimal ist.

Bei einigen Ausführungsformen der Methode sind die Schichthöhe dZ und der Tropfendurchmesser D konstant.

Bei einigen Ausführungsformen der Methode kann der Tropfendurchmesser D in einem Bereich um den Wert eines vorgegebenen Tropfendurchmessers D₀ variiert werden.

### Nebenanspruch:

Bei einigen Ausführungsformen der Methode kann der Tropfendurchmesser D neben einem ersten Wert des Tropfendurchmessers einen zweiten, vom ersten Wert verschiedenen Wert des Tropfendurchmessers annehmen.

Bei einigen Ausführungsformen der Methode wird die Schichthöhe dZ in Kombination mit dem Tropfendurchmesser D variabel berechnet.

Bei einigen Ausführungsformen der Methode wird die Fallentscheidung auf Basis eines anderen mathematischen Zusammenhangs gefällt.

Ausführungsbeispiele werden im Folgenden anhand der beigefügten Zeichnungen näher erläutert. Darin zeigt:
- Fig. 1: eine schematische Blockdarstellung einer Vorrichtung zur additiven Fertigung, in der ein Bauteil schichtweise unter Verwendung eines Druckkopfs gefertigt wird;
- Fig. 2: eine schematische Draufsicht auf eine Bauplattform der Vorrichtung von Fig. 1, auf der Abgaben von Tropfen entlang von Linien bei drei unterschiedlichen Tropfenabständen dT nebeneinander dargestellt sind;
- Fig. 3: eine schematische Draufsicht ähnlich Fig. 2, wobei die Ablage mehrerer solcher Linienbahnen nebeneinander mit gleichem Tropfenabstand aber bei drei unterschiedlichen Linienabständen dL dargestellt sind;
- Fig. 4: eine schematische Seitenansicht auf ein Detail des gerade zu fertigenden Bauteils, wobei Fertigungen mit unterschiedlichen Schichtdicken dZ nebeneinander dargestellt sind;
- Fig. 5: eine Draufsicht auf die Bauplattform bei einer Fertigung des Bauteils, wobei links eine herkömmliche ohne Skin und rechts die Fertigung mit Skin dargestellt ist;
- Fig. 6: einen Schnitt durch ein beispielhaftes zu fertigendes Bauteil;
- Fig. 7: eine schematische Schnittdarstellung des Bauteils von Fig. 6, in der Tropfenablagen nach einer bisherigen Ablagestrategie dargestellt sind;
- Fig. 8: ein Flussdiagramm für ein Verfahren zum Generieren eines Steuerungsdatensatzes zur Steuerung des Druckkopfes für eine Ablagestrategie nach einer Ausführungsform der Erfindung;
- Fig. 9: eine Darstellung wie in Fig. 7, wobei die Tropfenablage mit den nach dem Verfahren generierten Steuerungsdatensatz erfolgt ist; und
- Fig. 10: eine Darstellung wie in Fig. 7 für eine weiteres Beispiel einer Form für ein Bauteil, dessen Fertigung mit der neuen Ablagestrategie verbessert werden kann.

Im Folgenden werden Verfahren und Vorrichtungen zur additiven Fertigung sowie computerimplementierte Verfahren zum Generieren von Steuerungsdatensätzen hierfür und eine Vorrichtung zur Datenverarbeitung sowie eine Steuerung hierfür gemäß Ausführungsbeispielen der Erfindung anhand der beigefügten Zeichnungen näher erläutert.

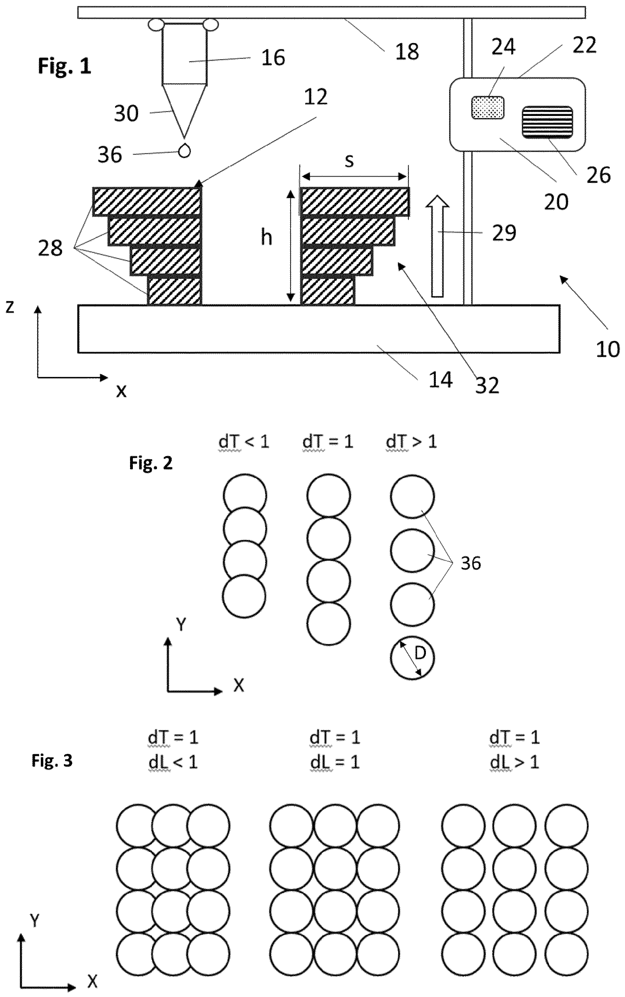

Fig. 1 zeigt schematisch eine Vorrichtung 10 zur tropfenbasierten additiven Fertigung eines Bauteils 12, wobei die Vorrichtung 10 eine Bauplattform 14, einen Druckkopf 16 zum tropfenweisen Aufbringen flüssigen Materials, einen Bewegungsmechanismus 18 zur relativen Bewegung des Druckkopfs 16 und der Bauplattform und damit des zu fertigenden Bauteils 12 und eine Steuerung 20 zur Steuerung der relativen Bewegung und der Tropfenabgabe des Druckkopfes 16 anhand von Steuerungsdatensätzen aufweist. Die computerimplementierte Steuerung 20 ist als Vorrichtung 22 zur Datenverarbeitung mit einem Prozessor 24 und einem Speicher 26 ausgebildet, in dem wenigstens ein Computerprogramm (sogenannter "Slicer") zur Steuerung und zur Generierung von Steuerungsdatensätzen gespeichert sind.

Mit dem auf der Vorrichtung 10 durchzuführenden tropfenbasierten additiven Fertigungsverfahren werden in grundsätzlich bekannter Weise dreidimensionale Bauteile 12 schichtweise aufgebaut, die mehreren Schichten 28 sind in Fig. 1 schematisch dargestellt. In Fig. 1 ist die Aufbaurichtung 29 die z-Richtung, und der Druckkopf 16 und die Bauplattform 14 werden in einer Schicht in der x-y-Ebene und beim Übergang von einer Schicht 28 zur nächsten in der z-Ebene relativ zueinander verfahren. Grundsätzlich ist es möglich, dass dabei der Druckkopf 16 bewegt wird und die Bauplattform 14 stationär bleibt oder umgekehrt die Bauplattform 14 bewegt wird und der Druckkopf 16 stationär bleibt oder dass beide bewegt werden. Eine entsprechende Fertigungstechnik sowie Einzelheiten der Vorrichtung 10 sind dem Fachmann, insbesondere aus den Literaturstellen [1] bis [6] bekannt, so dass sie hier nicht weiter beschrieben werden.

Die additive Fertigung oder "Additive Manufacturing" verzeichnet schon seit Langem ein starkes Wachstum in sämtlichen Bereichen. Neben der stetig größer werdenden Anzahl an Anbietern, Zulieferern und Dienstleistern erweitern sich die Anwendungsfelder durch kontinuierlich verbessernde Prozessqualität und damit steigender Bauteilkomplexität sowie Bauteilgröße. Jedes dieser verschiedenen 3D-Druckverfahren bedarf einer Software, die aus dem 3D-Modell eines additiv herzustellenden Bauteils 12 eine verfahrensspezifische Achsbewegung (für die x-y- und z-Achse) berechnet. Dieser sogenannte "Slicer" berechnet so beispielsweise bei einem hier nicht in Rede stehenden "Laser-Pulverbett"-Verfahren, wie der Spiegel bewegt werden muss, der den Laser ablenkt, der wiederum für das Aufschmelzen des Pulvers verantwortlich ist. Der Slicer einer "Metal Fused Deposition Modeling"-Anlage berechnet den Weg, den die Düse zurücklegt, um mit dem mit einer definierten Förderrate geförderten Filament das beabsichtigte Bauteil aufzubauen.

Der Slicer ist also eine Softwarelösung, die unter Berücksichtigung der Verfahrenscharakteristik eines 3D-Druckverfahrens für die Berechnung mehrerer Achsbewegungen für das additive Herstellen von Bauteilen 12 verschiedener Komplexität verantwortlich ist. Dabei soll eine möglichst hohe Bauteilqualität entstehen, die durch Kriterien wie Oberflächenbeschaffenheit, Gefügehomogenität, Dichte, mechanische Eigenschaften etc. definiert wird.

Jedes 3D-Druckverfahren stößt dabei früher oder später an Grenzen, ab denen Bauteile aufgrund zu hoher Komplexität mit der bestehenden Anlagentechnik in Kombination mit dem Softwarestand nicht mehr realisierbar sind.

Ausführungen der Erfindung betreffen tropfenbasierte 3D-Druckverfahren. Ein tropfenbasiertes 3D-Druckverfahren gemäß Ausführungsbeispielen der Erfindung, dessen Tropfendurchmesser sich durch Prozessadaption im Bereich von beispielsweise 100µm bis 3000µm einstellen lässt, kann diese hohe Variabilität beim Slicen berücksichtigen und hat dadurch logischerweise mehr Potenziale bei der Herstellung verschiedener Bauteilgeometrien.

Hingegen stößt ein tropfenbasiertes 3D-Druckverfahren, in dessen Verfahrenscharakteristik eine Tropfenvariation von nur +-10µm möglich ist, also beispielsweise 490µm bis 510µm, mit gleichem Slicer früher an seine Grenzen.

Ein Ziel von einigen Ausführungsformen der Erfindung ist daher, den Slicer durch Erweiterung der Berechnungsstrategien zu befähigen, eingegrenzte Anwendungsmöglichkeiten zu erweitern.

Es kann der Fall sein, dass der Tropfendurchmesser eines tropfenbasierten 3D-Druckprozesses nur mit hohem Aufwand variiert werden kann oder die Zuverlässigkeit der Tropfenänderung aufgrund von Störeinflüssen nicht ausreichend zuverlässig ist. Neben dem Tropfendurchmesser haben auch bereits bisher eingesetzte innovative Slicer eine Vielzahl an integrierten Parametern, die das ermöglichen.

Im Folgenden wird eine Lösung präsentiert, die anhand dieser Parameter das Anwendungsfeld an potenziell druckbaren Bauteilgeometrien eines 3D-Druckverfahrens mit eingeschränkten Möglichkeiten bei der Variation des Tropfendurchmessers erweitert.

Ausführungsformen der Erfindung gehen von einem von der Anmelderin entwickelten Flüssigmetalldruckverfahren namens "Grob Metal Printing", abgekürzt "GMP" aus, von dem Einzelheiten in [1] bis [6] beschrieben und gezeigt sind. Dieses drahtbasierte 3D-Druckverfahren generiert aus einer Düse 30 flüssige Tropfen 36 mit definierten Eigenschaften, die über der Bauplattform 14 abgelegt werden. Der hierzu in der Steuerung 20 als Computerprogramm vorhandene Slicer weiß, zu welchem Zeitpunkt ein Tropfen 36 ausgestoßen wird und berechnet die Bewegungen der X-, Y- und Z-Achse, die dafür sorgen, dass die gewünschten Bauteile 12 schichtweise aufgebaut werden. In der grundlegenden Ablagestrategie bevorzugter Ausgestaltungen dieses Slicers ist jeweils ein Faktor für den Tropfenabstand dT, den Linienabstand dL sowie die Schichtdicke dZ definiert. Diese Faktoren werden jeweils mit dem bestehenden Tropfendurchmesser D multipliziert, um den absoluten Wert zu berechnen. Im Folgenden werden das Verfahren zum Generieren von Steuerungsdatensätzen anhand das Angabe der Parameterwerte dT, dL und dZ als derartige Faktoren des Tropfendurchmessers D erläutert. Selbstverständlich können in anderen Ausführungsbeispielen die Parameter auch auf andere Weise angegeben werden, z.B. als Absolutwerte z.B. in mm oder µm.

In Fig. 2 ist beispielsweise eine Draufsicht auf die Bauplattform 14 bei der Tropfenablage entlang von drei Linien gezeigt, wobei in der linken Linie Tropfen mit einem Tropfenabstand dT<1, in der mittleren Linie Tropfen mit einem Tropfenabstand dT=1 und in der rechten Linie Tropfen mit einem Tropfenabstand dT<1 abgelegt werden, um den Effekt der Veränderung des Tropfenabstands dT zu verdeutlichen.

In Fig. 3 ist eine Draufsicht auf die Bauplattform 14 zu sehen, wobei zur Verdeutlichung des Effekts einer Veränderung des Linienabstands dL links ein Aufbau einer Schicht durch Tropfenablage entlang von Linien mit einem Tropfenabstand dT=1 gezeigt ist, wobei die Linien mit einem Linienabstand von dL<1 nebeneinander abgelegt werden. In der Mitte ist der Aufbau einer Schicht durch Tropfenablage entlang von Linien mit einem Tropfenabstand dT=1 gezeigt, wobei die Linien mit einem Linienabstand von dL=1 nebeneinander abgelegt werden. Rechts ist der Aufbau einer Schicht durch Tropfenablage entlang von Linien mit einem Tropfenabstand dT=1 gezeigt, wobei die Linien mit einem Linienabstand von dL>1 nebeneinander abgelegt werden.

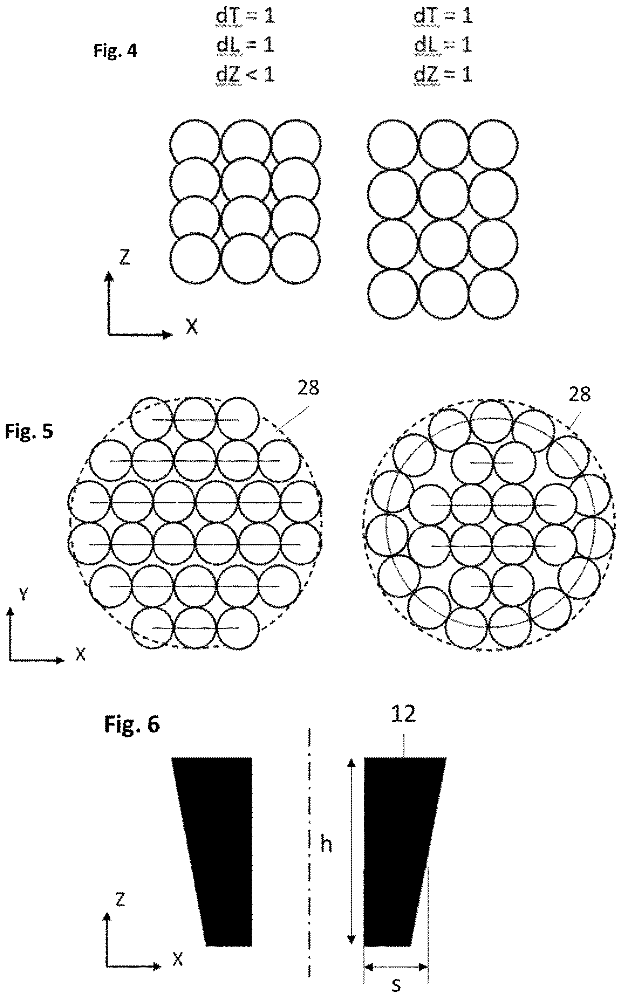

In Fig. 4 ist eine schematische Seitenansicht auf Bauteile gemäß einem vereinfachten Modell gezeigt, wobei in einem links dargestellten Bauteil Schichten mit einer Schichtdicke dZ<1 und in einem rechts dargestellten Bauteil Schichten mit einer Schichtdicke dZ=1 abgelegt worden sind.

Mit dieser in Fig. 2 bis 4 dargestellten Ablagestrategie der flüssigen Tropfen mit konstanten Werten dT, dL und dZ können bereits Bauteile mit geringer Komplexität gedruckt werden. Ein unter Verwendung des Parametersatzes dT = dL = dZ = 1 entstehendes Bauteil wird die Anforderung der gewünschten Geometrie in den meisten Fällen nicht erfüllen, da es die Bauteilhöhe nicht erreicht und/oder eine sehr geringe Bauteildichte aufweisen wird. In einem vereinfachten Modell wird approximiert, dass sich der kugelförmige Tropfen beim Auftreffen auf der Bauteiloberfläche als Voxel erstarrt. Die Entstehung von Poren wird verhindert und die geforderte Bauteilhöhe erreicht, wenn das Voxelvolumen, also das Produkt aus dT*Tropfendurchmesser D, dL*Tropfendurchmesser D und dZ*Tropfendurchmesser D wie im Folgenden an das Volumen des Tropfens V = 4/3*r³*pi angepasst wird. $\frac{4}{3} ∗ {\left(\frac{D}{2}\right)}^{3} ∗ π = \left(dT∗D\right) ∗ \left(dL∗D\right) ∗ \left(dZ∗D\right)$

Daraus ergibt sich $dT ∗ dL ∗ dZ = \frac{π}{6} = 0 , 5236$

Um höhere Komplexitäten darstellen zu können, wird der Slicer bei Ausführungsformen der Erfindung um weitere Features und Strategien erweitert.

Gemäß der Literaturstelle [6] werden z.B. durch das Drucken eines oder mehrerer Skins, also das Ablegen einer oder mehrerer Tropfenlinien auf der Außenkontur der zu druckenden Schicht, die Oberflächeneigenschaften des resultierenden Bauteils stark verbessert, wie dies in Fig. 5 gezeigt ist. Dort ist links der Aufbau einer Schicht lediglich durch Ablage von Linien nebeneinander gezeigt, wobei dT= 1 und dL=1 und die Anzahl der Skins = 0 ist. Rechts ist der Aufbau einer Schicht gezeigt, wo im Kern die Ablage von Linien nebeneinander und eine Linie entlang der Außenkontur abgelegt wird, so dass dT=1, dL= 1 und die Anzahl der Skins = 1 ist.

Mit der GMP-Technologie nach aktuellem Stand gemäß [1] bis [6] können derzeit Überhänge mit bis zu 45° Grad als dünne Struktur mit konstanter Wandstärke ab 2*Tropfendurchmesser gedruckt werden. Weiterhin gibt es Geometrien, wie zum Beispiel Überhänge über 45°, die nur mit einem Workaround - in diesem Fall durch Supportstrukturen - realisiert werden können. Aktuell gibt es keine Lösung, um eine Geometrie mit variabler Wandstärke über Z ohne Qualitätsverluste zu drucken.

Ausführungsformen der Erfindung betreffen eine neuartige Strategie des Slicers, die insbesondere Anwendung findet bei Bauteilen 12, die vor allem, wie in der Fig. 6 dargestellt, in Überhangbereichen 32 eine variable Wandstärke s über der Bauteilhöhe h aufweisen. Die Ausführungsformen der Erfindung sind aber auch wie bisher zum Drucken von Bauteilen mit gleichbleibender Wandstärke s geeignet. Sie lassen sich dort einsetzen, wo die Wandstärke s über die Bauteilhöhe variieren kann oder auch nicht.

Um Bauteile der in Fig. 6 gezeigten Art tropfenbasiert 3D zu drucken, würde eine triviale Lösung darin bestehen, den Tropfendurchmesser D derart zu variieren, dass die radiale Schichtbreite s zu jedem Zeitpunkt durch eine natürliche Zahl an Tropfen vollständig ausgefüllt wird. Allerdings ist es den wenigsten 3D-Druckverfahren möglich, den Tropfendurchmesser in einem derart großen Maß zu variieren. Bei den aus den obigen Literaturstellen bekannten Verfahren ist dieses Vorgehen mit einem derart großen Aufwand verbunden, dass die Prozesse unwirtschaftlich werden.

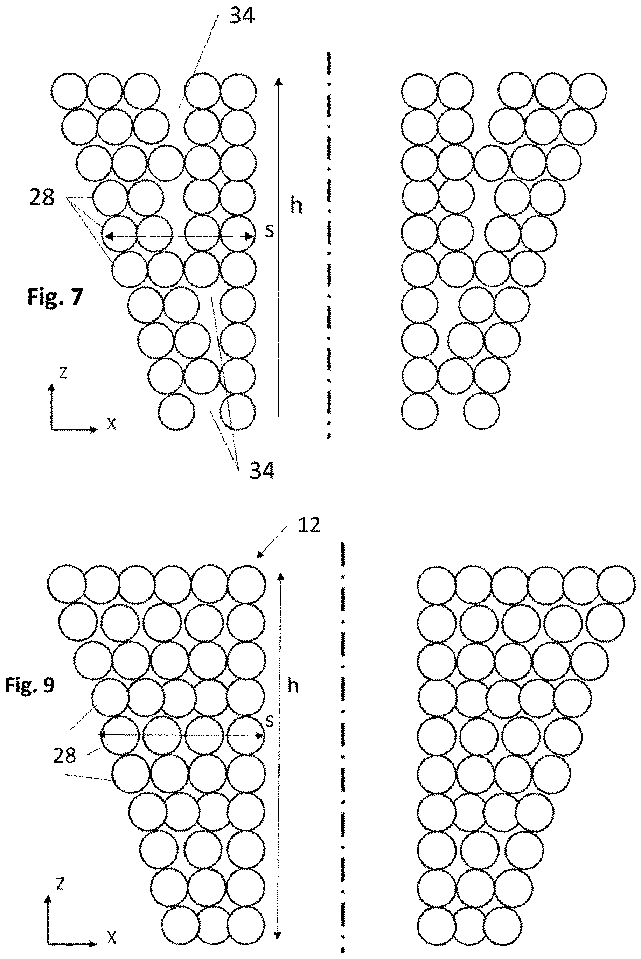

Die Fig. 7 zeigt, wie oben beschriebene und in Fig. 6 beispielhaft gezeigte Geometrien nach dem aktuellen Stand der Technik gesliced werden, wenn die Möglichkeit einer Variation der Tropfendurchmesser nicht existiert. Regelmäßige Freiräume 34 im gesliceten Modell führen im Laufe des Druckprozesses zu einer wachsenden Unebenheit auf der Bauteiloberfläche. Neben dem Fakt, dass dadurch ohne weitere Kompensation die Soll-Geometrie des Bauteils 12 nicht erreicht werden kann, landen die Tropfen der folgenden Schichten aufgrund der unebenen Oberfläche nicht in den berechneten Destinationen. Eine Bauteilanalyse eines derart gedruckten Bauteils wird aller Wahrscheinlichkeit nach neben der Geometrieabweichung einen erhöhten Porenanteil aufweisen.

Bei besonders bevorzugten Ausführungsformen der Erfindung ist im Gegensatz dazu vorgesehen, dieses Bauteil 12 mit Überhang und variabler Wandstärke s über der Bauteilhöhe ausschließlich in Skinbahnen zu drucken, bei denen sich dynamisch dT, dL und dZ derart berechnen, dass eine ebene, lückenlose Tropfenschicht entsteht.

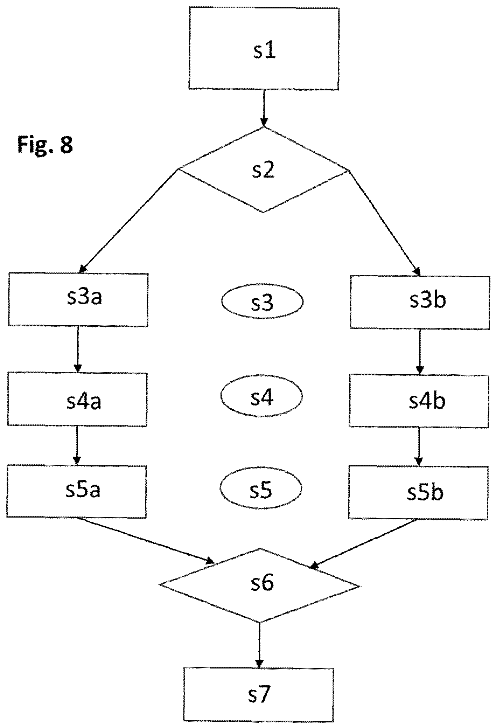

Fig. 8 zeigt ein Flussdiagramm, das das Vorgehen des Slicers zur Berechnung eines NC-Codes und somit ein Beispiel für ein Verfahren zum Generieren von Steuerungsdatensätzen für die relative Bewegung von Druckkopf 16 und Bauteil 12 zeigt. Die Beschriftungen darin bedeuten:
- s1: Gegebene Größen:
Wandstärke/Schichtbreite s
Tropfendurchmesser D
Optimaler Soll-Tropfenabstand dTₒₚₜ
Optimaler Linienabstand dLₒₚₜ
Optimale Schichtdicke dZₒₚₜ
Tropfen-Linien-Konstante kTL
- s2: Berechnung theoretische Linienanzahl xₜₕ: ${x}_{th} = \frac{s}{dLopt ∗ D}$
- s3: x ∈ N
- s3a: Berechnung dL_{ab} mit abgerundeter Linienzahl x_{ab}: ${dL}_{ab} = \frac{s}{{x}_{ab} ∗ D}$
- s3b: Berechnung dL_{auf} mit aufgerundeter Linienzahl x_{auf}: ${dL}_{auf} = \frac{s}{{x}_{auf} ∗ D}$
- s4: $dT + dL = kTL$
- s4a: Berechnung dT_{ab} mit abgerundeter Linienzahl x_{ab}: ${dT}_{ab} = kTL - {dL}_{ab}$
- s4b: Berechnung dT_{auf} mit aufgerundeter Linienzahl x_{auf}: ${dT}_{auf} = kTL - {dL}_{auf}$
- s5: $dT ∗ dL ∗ dZ = \frac{π}{6}$
- s5a: Berechnung dZ_{ab} mit abgerundeter Linienzahl x_{ab}: ${dZ}_{ab} = \frac{π}{6 ∗ {dT}_{ab} ∗ {dL}_{ab}}$
- s5b: Berechnung dZ_{auf} mit aufgerundeter Linienzahl x_{ab}: ${dZ}_{auf} = \frac{π}{6 ∗ {dT}_{auf} ∗ {dL}_{auf}}$
- s6: Fallentscheidung: $\left|dL-dLopt\right| + \left|dT-dTopt\right| + \left|dZ-dZopt\right| = min .$
- s7: Ergebnis:
Tropfenabstand dT
Linienabstand dL
Schichthöhe dZ

Gemäß dem Schritt s1 sind gegeben der Tropfendurchmesser D, die (radiale) Schichtbreite s eines dünnwandigen Bereichs mit Down- oder Upskin eines zu druckenden Bauteils 12 sowie die optimalen Sollwerte für Tropfenabstand dTₒₚₜ, Linienabstand dLₒₚₜ und Schichtdicke dZₒₚₜ. Diese optimalen Werte werden dadurch definiert, dass sie in der Mitte eines Wertebereichs liegen, dessen Werte die an das Bauteil 12 gestellten Anforderungen vollständig erfüllen. Die optimalen Werte sind abhängig von den Materialeigenschaften des Druckmaterials, wie beispielsweise dem Erstarrungsintervall oder der Viskosität und müssen für jedes Druckmaterial individuell ermittelt werden. Ist die Abweichung eines Faktors zu dessen optimalem Wert zu groß, kann es zu einer Verminderung der mechanischen Eigenschaften des Bauteils kommen.

Fiktives Beispiel: In Vorversuchen wurde ermittelt, dass ich den Tropfenabstand dT im Bereich von 1,4 bis 0,6 variieren darf, ohne dass sich die Qualität des gedruckten Bauteils 12 verschlechtert. Der optimale Tropfenabstand liegt in der Mitte des Bereichs, also bei dTₒₚₜ=1,0, da sich der Tropfenabstand von diesem Wert aus um 0,4 vergrößern oder verringern kann. Wird mit einem Tropfenabstand dT von über 1,4 oder unter 0,6 gedruckt, also beispielsweise 1,5 oder 0,5, dann entstehen zwischen den einzelnen Tropfen Poren, was die mechanischen Eigenschaften, wie z.B. die Zugfestigkeit oder die Bruchdehnung verschlechtert. Außerdem wird die Geometrie des gedruckten Bauteils nicht eingehalten.

Neben den optimalen Werten gibt es eine sogenannte Tropfen-Linien-Konstante kTL, die ebenfalls für jede Materialzusammensetzung des Druckmaterials individuell in Grundlagenversuchen bestimmt werden soll. Der Tropfenabstand lässt sich schlecht mit jedem beliebigem Linienabstand variieren. Wenn sich Tropfenabstand und Linienabstand gleichzeitig immer weiter vergrößern, kommt man an einem Punkt, an dem Poren entstehen und die Qualität des gedruckten Bauteils 12 nicht mehr den Anforderungen entspricht. Hinter der Tropfen-Linien-Konstante kTL ist das Ergebnis aus der Summe von Tropfenabstand dT und Linienabstand dL hinterlegt.

In Schritt s2 wird eine theoretische Anzahl xₜₕ an Bahnen aus dem Quotienten zwischen der Schichtbreite s und einem vorbestimmten Soll-Linienabstand dL_{O} mit ${x}_{th} = \frac{s}{{dL}_{O}}$ berechnet. Der Soll-Linienabstand dL₀ gibt dabei den optimalen Soll-Linienabstand so an, wie die Wandstärke s angegeben wird. Wird die Wandstärke s z.B. als absoluter Wert in mm oder µm angegeben, dann wird auch für den Soll-Linienabstand der absolute Wert angegeben. Bei unseren obigen Beispielen, wo dT, dL und dZ als Faktoren des Tropfendurchmessers D angegeben werden, ist dann als dLₒ=dLₒₚₜ*D einzugeben.

Anschließendem erfolgt ein Aufrunden des Wertes xₜₕ auf die nächsthöhere natürliche Zahl, um eine aufgerundeten Anzahl x_{auf} zu erhalten, und Abrunden des Wertes des Quotienten auf die nächstliegende tiefere natürliche Zahl, um eine abgerundeten Anzahl x_{ab} zu erhalten.

Anschließend wird im Zweig b) des Flussdiagramms von Fig. 8 ein erster Datensatz von Linienabstand dL, Tropfenabstand dT und Schichtdicke dZ basierend auf der aufgerundeten Anzahl x_{auf} berechnet.

Im Zweig a) des Flussdiagramms von Fig. 8 wird ein zweiter Datensatzes von Linienabstand dL, Tropfenabstand dT und Schichtdicke dZ basierend auf dem abgerundeten Wert x_{ab} berechnet.

Dann werden die Werte des ersten und zweiten Datensatzes mit den abhängig von dem Bauteil vorbestimmten optimalen Sollwerten dLₒₚₜ, dTₒₚₜ und dZₒₚₜ verglichen, und es wird von dem ersten oder zweiten Datensatzes basierend auf diesem Vergleich einer als Steuerdatensatz ausgewählt.

Im Folgenden wird das in Fig. 8 gezeigte Beispiel der Bestimmung der Steuerdatensätze näher erläutert. Demnach wird in einer ersten Rechnung in Schritt s2 die Schichtbreite s durch das Produkt "optimales dLₒₚₜ * Tropfendurchmesser D" geteilt, z.B. wird eine Wand mit s=4,5*D bei einem optimalen dLₒₚₜ von 1 durch "1*D" geteilt. Das Ergebnis dieser Rechnung ist die theoretische Linienanzahl xₜₕ. Da die Schichtbreite s nur durch eine natürliche Anzahl an Skins aufgelegt werden kann, wird das Ergebnis im nächsten Schritt auf- und abgerundet, wodurch sich in unserem Beispiel (xₜₕ = 4,5) die beiden Werte 4 und 5 ergeben. Ist das Ergebnis dieser Berechnung eine ganze Zahl, wird mit diesem Wert weitergerechnet und die spätere Fallentscheidung erübrigt sich. Tritt dieser Zufall nicht ein, werden für beide Fälle a) abgerundet und b) aufgerundet in den nächsten Schritten jeweils die Faktoren dT und dZ berechnet.

Danach wird in Schritt s3, s3a, s3b mit der ab- bzw. aufgerundeten Linienzahl x_{ab} bzw. x_{auf} mit der in s2) beschriebenen Formel zurückgerechnet auf für jeden Fall ein reales dL_{ab} bzw. dL_{auf}.

In Schritt s4, s4a, s4b wird mit Hilfe der Bedingung "Tropfenabstand dT + Linienabstand dL = Tropfen-Linien-Konstante kTL" ein zugehöriger Tropfenabstand dT_{ab} bzw. dT_{auf} ermittelt.

Unter der weiteren Bedingung, die besagt, dass das Produkt aus dem Tropfenabstand dT, dem Linienabstand dL und der Schichthöhe dZ dem Wert "π/6" entsprechen muss, ergibt sich in Schritt s5, s5a, s5b eine Schichthöhe dZ_{ab} bzw. dZ_{auf}.

In einer Fallentscheidung werden in Schritt s6 die Faktoren dT_{ab}, dL_{ab} und dZ_{ab}, deren Werte sich aus der abgerundeten Linienzahl x_{ab} ergeben haben, mit den Werten der Faktoren dT_{auf}, dL_{auf} und dZ_{auf}, die sich aus der aufgerundeten Linienzahl x_{auf} ergeben haben, verglichen. Es wird sich für den Fall entschieden, dessen Summe der drei Beträge zwischen dem jeweiligen Faktor und dessen optimalen Wert kleiner ist. Eine Parameterkombination, bei der sich die berechneten Werte für dT, dL und dZ nur um jeweils 0,1 nach oben oder unten von dessen optimalen Werten abweichen, wird einer Parameterkombination bevorzugt, dessen berechnete Werte für dT, dL und dZ um jeweils 0,2 nach oben oder unten von dessen optimalen Werten abweichen.

Bei einigen Ausführungsformen, insbesondere solchen, wo der Tropfenerzeugungsprozess noch Optimierungsbedarf hat, wird durch den Slicer keine Änderung des Tropfendurchmessers D zugelassen, d.h. der Tropfendurchmesser bleibt bei diesen Ausführungsformen konstant. Bei anderen Ausführungsformen kann der Tropfendurchmesser D auch, z.B. in einem kleinen Bereich oder durch Auswahl aus einer geringen Anzahl von vorgegebenen Tropfendurchmessern, variiert werden.

Fig. 9 zeigt einen schematischen, stark vereinfachten Schnitt durch das mit dem Slicer gemäß Ausführungsbeispielen der Erfindung tropfenbasiert 3D gedruckten Bauteils 12 der in Fig. 6 beispielhaft gezeigten Form. Dabei sind 10 Schichten erzeugt worden, deren Steuerungsdatensätze in der folgenden Tabelle wiedergegeben sind:

| Schicht | Anzahl Skins | dT | dL | dZ |
|---|---|---|---|---|
| 10 | 6 | 0,86 | 0,94 | 0,65 |
| 9 | 5 | 0,73 | 1,07 | 0,67 |
| 8 | 5 | 0,80 | 1,00 | 0,65 |
| 7 | 5 | 0,87 | 0,93 | 0,65 |
| 6 | 4 | 0,72 | 1,08 | 0,67 |
| 5 | 4 | 0,80 | 1,00 | 0,65 |
| 4 | 4 | 0,88 | 0,92 | 0,65 |
| 3 | 3 | 0,69 | 1,11 | 0,68 |
| 2 | 3 | 0,80 | 1,00 | 0,65 |
| 1 | 3 | 0,91 | 0,89 | 0,65 |

Die Strategie gemäß bevorzugten Ausführungsformen der Erfindung eignet sich besonders bei kleinen Up- oder Downskins bis ungefähr 30°, da hier der Sprung von n Skins zu n+1 Skins über teilweise deutlich mehr als 2 Schichten stattfindet.

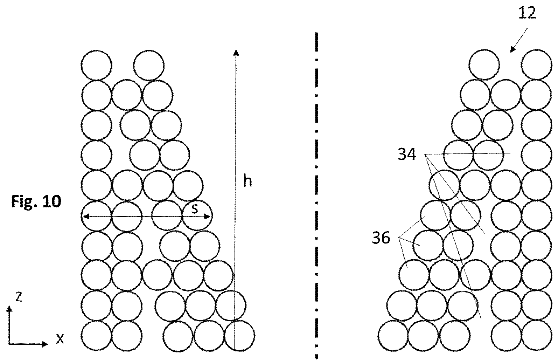

Im Folgenden werden durch Versuche bestätigte Vorteile von einigen Ausgestaltungen der Erfindung erläutert:
1. Durch die Verwendung des Verfahrens zur Steuerungsdatensatzgenerierung gemäß Ausführungsbeispielen der Erfindung entsteht eine ebene und lückenlose Tropfenschicht. Ohne Anpassung der Steuerungsdaten des "Dynamic Skin" berechnet der bisherige Slicer Lücken im Bauteilinneren. Dieses Problem lässt sich durch das Variieren der Slicefaktoren Tropfenabstand dT, Linienabstand dL und Schichthöhe dZ lösen. Die dynamische Anpassung dieser drei Faktoren führt zu einer optimalen Volumenverteilung der abgelegten Tropfen und somit zu einer Bauteiloberfläche, die nach jeder Schicht eben ist. Folglich ist gewährleistet, dass die Tropfen der jeweils folgenden Schicht an den berechneten Positionen landen.
2. Ein weiterer Vorteil der neuartigen Berechnungsstrategie ist, dass sie neben dem Downskin auch Anwendung im Upskin von dünnwandigen Teilen findet. Fig. 10 zeigt ein Beispiel für ein derartiges Bauteil, das mit bisherigen Slicern tropfenbasiert 3D-gedruckt ist. Auch hier entstehen Freiräume 34. Vor allem bei kleinen Upskin-Winkeln wird durch Anpassung der Steuerungsdatensätze gemäß Ausführungsbeispielen der Erfindung die Entstehung durch unebene Schichten wegen Lücken in einzelnen Schichten verhindert. Vergleichbar wie in Fig. 9 gezeigt, lassen sich auch bei Bauteilen 12 der in Fig. 10 gezeigten Art die Freiräume 34 vermeiden.

Es ist somit ein Verfahren "Dynamic Skin" beschrieben worden, welches als Verfahren zum Generieren von Steuerungsdatensätzen eine Berechnungsgrundlage zur Bahnberechnung für 3D-Druck-Anlagen mit einem tropfenbasierten Druckverfahren beschreibt, das bei der additiven Herstellung von Bauteilen 12 mit potentiell variabler Wandstärke s zum Einsatz kommt.

Um Bauteile 12, deren Wandstärke über die Bauteilhöhe stärker variieren können, mit hoher Qualität bei geringerem Aufwand tropfenbasiert additiv fertigen zu können, wird ein computerimplementiertes Verfahren zum Generieren eines Steuerungsdatensatzes für jede Schicht vorgeschlagen, wobei zunächst eine theoretischen Anzahl xₜₕ an Bahnen aus dem Quotienten zwischen der Schichtbreite s und einem vorbestimmten Soll-Linienabstand dL_{O} errechnet wird, diese theoretische Anzahl auf nächsthöhere natürliche Zahl aufgerundet und auf die nächstliegende tiefere natürliche Zahl abgerundet wird, dann jeweils Datensätze mit der aufgerundeten und der abgerundeten Anzahl erzeugt werden und dann diese Datensätze für die abgerundete Anzahl und die aufgerundete Anzahl mit abhängig von dem Bauteil vorbestimmten Sollwerten verglichen werden. Anschließend erfolgt eine Auswahl eines der Datensätze als Steuerdatensatz basierend auf diesem Vergleich.

### Bezugszeichenliste:

- 10: Vorrichtung zur additiven Fertigung
- 12: Bauteil
- 14: Bauplattform
- 16: Druckkopf
- 18: Bewegungsmechanismus
- 20: Steuerung
- 22: Vorrichtung zur Datenverarbeitung
- 24: Prozessor
- 26: Speicher
- 28: Schicht
- 29: Aufbaurichtung
- 30: Düse
- 32: Überhangbereich
- 34: Freiraum
- 36: Tropfen
- s: Wandstärke
- s1: Gegebene Größen:
Wandstärke/Schichtbreite s
Tropfendurchmesser D
Optimaler Soll-Tropfenabstand dTₒₚₜ
Optimaler Linienabstand dLₒₚₜ
Optimale Schichtdicke dZₒₚₜ
Tropfen-Linien-Konstante kTL
- s2: Berechnung theoretische Linienanzahl xₜₕ: ${x}_{th} = \frac{s}{dLopt ∗ D}$
- s3: $x ∈ N$
- s3a: Berechnung dL_{ab} mit abgerundeter Linienzahl x_{ab}: ${dL}_{ab} = \frac{s}{{x}_{ab} ∗ D}$
- s3b: Berechnung dL_{auf} mit aufgerundeter Linienzahl x_{auf}: ${dL}_{auf} = \frac{s}{{x}_{auf} ∗ D}$
- s4: $dT + dL = kTL$
- s4a: Berechnung dT_{ab} mit abgerundeter Linienzahl x_{ab}: ${dT}_{ab} = kTL - {dL}_{ab}$
- s4b: Berechnung dT_{auf} mit aufgerundeter Linienzahl x_{auf}: ${dT}_{auf} = kTL - {dL}_{auf}$
- s5: $dT ∗ dL ∗ dZ = \frac{π}{6}$
- s5a: Berechnung dZ_{ab} mit abgerundeter Linienzahl x_{ab}: ${dZ}_{ab} = \frac{π}{6 ∗ {dT}_{ab} ∗ {dL}_{ab}}$
- s5b: Berechnung dZ_{auf} mit aufgerundeter Linienzahl x_{ab}: ${dZ}_{auf} = \frac{π}{6 ∗ {dT}_{auf} ∗ {dL}_{auf}}$
- s6: Fallentscheidung: $\left|dL-dLo\right| + \left|dT-dTo\right| + \left|dZ-dZo\right| = min .$
- s7: Ergebnis:
Tropfenabstand dT
Linienabstand dL
Schichthöhe dZ
- h: Bauteilhöhe

## Patentansprüche

1. Computerimplementiertes Verfahren zum Generieren eines Steuerungsdatensatzes zur Steuerung eines Druckkopfes (16) bei einer tropfenbasierten additiven Fertigung eines Bauteils (12), welches eine Wandstärke aufweist, die über der Bauteilhöhe variabel sein kann, so dass jede additiv zu fertigende Schicht (28) des Bauteils eine Schichtbreite s aufweist, wobei der Steuerungsdatensatz für jede Schicht (28) einen Tropfenabstand dT, mit der Tropfen bei der tropfenbasierten additiven Fertigung mit einem Tropfendurchmesser D entlang von Linien abgegeben werden, einen Linienabstand dL, der den Abstand der Linien angibt und eine Schichthöhe dZ enthält, **gekennzeichnet durch** die Schritte:
a) Berechnen einer theoretischen Anzahl xₜₕ an Bahnen aus dem Quotienten zwischen der Schichtbreite s und einem vorbestimmten Soll-Linienabstand dL_{O} mit ${x}_{th} = \frac{s}{{dL}_{O}}$ mit anschließendem Aufrunden des Wertes xₜₕ auf die nächsthöhere natürliche Zahl, um eine aufgerundeten Anzahl x_{auf} zu erhalten, und Abrunden des Wertes des Quotienten auf die nächstliegende tiefere natürliche Zahl, um eine abgerundeten Anzahl x_{ab} zu erhalten;
b) Berechnen eines ersten Datensatzes von Linienabstand dL, Tropfenabstand dT und Schichtdicke dZ basierend auf der aufgerundeten Anzahl Xauf,
c) Berechnen eines zweiten Datensatzes von Linienabstand dL, Tropfenabstand dT und Schichtdicke dZ basierend auf dem abgerundeten Wert, x_{ab} und
d) Vergleich der Werte des ersten und zweiten Datensatzes mit abhängig von dem Bauteil vorbestimmten Sollwerten dL_{O}, dT_{O} und dZ_{O} und Auswahl des ersten oder zweiten Datensatzes als Steuerdatensatz basierend auf diesem Vergleich.

2. Verfahren nach Anspruch 1, **dadurch gekennzeichnet,**
**dass** der Linienabstand berechnet wird mit ${dL}_{suf} = \frac{s}{{x}_{suf}}$, wobei das Suffix suf für "auf" bei dem ersten Datensatz und "ab" für den zweiten Datensatz steht.

3. Verfahren nach Anspruch 2, **dadurch gekennzeichnet,**
**dass** der Tropfenabstand berechnet wird mit
*dT_{suf} = kTL - dL_{suf},* wobei kTL eine vorbestimmte Konstante ist.

4. Verfahren nach einem der voranstehenden Ansprüche,
dass die Schichtdicke dZ ein vorbestimmter konstanter Wert ist.

5. Verfahren nach Anspruch 3, **dadurch gekennzeichnet,**
**dass** die Schichtdicke dZ aus der Beziehung *dZ_{suf}* × *dT_{suf}* × *dL_{suf}* = C bestimmt wird, wobei C eine vorbestimmte Konstante ist.

6. Verfahren nach einem der voranstehenden Ansprüche, **dadurch gekennzeichnet,**
**dass** Schritt d) enthält:
d1) Auswahl desjenigen Datensatzes, dessen Summe der Beträge der Abweichungen von den vorbestimmten Sollwerten minimal ist.

7. Verfahren nach einem der voranstehenden Ansprüche, **dadurch gekennzeichnet,**
**dass** die Werte dZ, dT und dL als Faktoren berechnet werden, wobei sich absolute Werte durch Multiplikation mit dem Tropfendurchmesser D ergeben.

8. Verfahren nach Anspruch 5 und nach Anspruch 7, **dadurch gekennzeichnet, dass** gilt $C = \frac{π}{6}$.

9. Verfahren nach einem der voranstehenden Ansprüche, **dadurch gekennzeichnet,**
**dass** der Tropfendurchmesser D
9.1 ein vorbestimmter konstanter Tropfendurchmesser ist oder
9.2 variabel ist oder
9.3 variabel ausgewählt wird aus einem ersten Tropfendurchmesser und einem sich von dem ersten Tropfendurchmesser unterscheidenden zweiten Tropfendurchmesser.

10. Verfahren nach Anspruch 9, **dadurch gekennzeichnet,**
**dass** die Schichtdicke dZ abhängig von dem variablen Tropfendurchmesser berechnet wird.

11. Verfahren zur additiven schichtweisen Fertigung eines Bauteils (12), welches eine Wandstärke aufweist, die über der Bauteilhöhe variabel sein kann, durch tropfenweises Aufbringen eines flüssigen Materials mittels eines Druckkopfes (16), umfassend:
Generieren von Steuerungsdatensätzen für Schichten (28) des Bauteils (12) mittels eines Verfahrens nach einem der voranstehenden Ansprüche und Steuern des Druckkopfes (16) mittels der generierten Steuerungsdatensätze.

12. Vorrichtung zur Datenverarbeitung, umfassend Mittel zur Ausführung des Verfahrens nach einem der Ansprüche 1 bis 10.

13. Computerprogramm umfassend Befehle, die bei der Ausführung des Programms durch einen Computer diesen veranlassen, das Verfahren nach einem der Ansprüche 1 bis 10 auszuführen.

14. Computerimplementierte Steuerung (20) für eine Vorrichtung (10) zur additiven Fertigung eines Bauteils (12), die einen Druckkopf (16) zum tropfenweisen Aufbringen flüssigen Materials und einen Bewegungsmechanismus (18) zur relativen Bewegung des Druckkopfs (16) und des zu fertigenden Bauteils (12) aufweist, wobei die Steuerung (20) dazu ausgebildet ist, die Vorrichtung (10) zum Durchführen des Verfahrens nach Anspruch 11 anzusteuern.

15. Vorrichtung (10) zur additiven Fertigung eines Bauteils (12), umfassend einen Druckkopf (16) zum tropfenweisen Aufbringen flüssigen Materials, einen Bewegungsmechanismus (18) zur relativen Bewegung des Druckkopfs (16) und des zu fertigenden Bauteils (12) und eine Steuerung (20), die dazu ausgebildet ist, die Vorrichtung (10) zum Durchführen des Verfahrens nach Anspruch 11 anzusteuern.

## Claims

1. Computer-implemented method for generating a control data set for controlling a printhead (16) during droplet-based additive manufacturing of a component (12) having a wall thickness that may vary across the height of the component, such that each layer (28) of the component which is to be additively manufactured has a layer width s, wherein the control data set contains, for each layer (28), a drop spacing dT at which drops having a drop diameter D are dispensed along lines during dropbased additive manufacturing, a line spacing dL, which specifies the distance between the lines, and a layer height dZ, **characterized by** the steps:
a) calculating a theoretical number xₜₕ of paths from the quotient between the layer width s and a predetermined target line spacing dL_{O}, using ${x}_{th} = \frac{s}{{dL}_{O}}$, followed by rounding up the value xₜₕ to the next higher natural number to obtain a rounded-up number x_{auf}, and rounding down the value of the quotient to the next lower natural number to obtain a rounded-down number x_{ab};
b) calculating a first data set of line spacing dL, drop spacing dT, and layer thickness dZ based on the rounded-up number x_{auf},
c) calculating a second data set of line spacing dL, drop spacing dT, and layer thickness dZ based on the rounded-down value x_{ab}, and
d) comparing the values of the first and second data sets with predetermined target values dL_{O}, dT_{O}, and dZ_{O}, which depend on the component, and selecting the first or second data set as the control data set based on this comparison.

2. Method according to claim 1, **characterized in**
**that** the line spacing is calculated using ${dL}_{suf} = \frac{s}{{x}_{suf}}$, where the suffix suf stands for "auf" for the first data set and "ab" for the second data set.

3. Method according to claim 2, **characterized in**
**that** the drop spacing is calculated using *dT_{suf}* = *kTL* - *dL_{suf}*, where kTL is a predetermined constant.

4. Method according to any one of the preceding claims, **characterized in**
**that** the layer thickness dZ is a predetermined constant value.

5. Method according to claim 3, **characterized in**
**that** the layer thickness dZ is determined from the relationship *dZ_{suf}* × *dT_{suf}* × *dL_{suf}* = *C*, where C is a predetermined constant.

6. Method according to any one of the preceding claims, **characterized in that** step d) comprises:
d1) selecting the data set whose sum of the amounts of the deviations from the predetermined setpoints is minimal.

7. Method according to any one of the preceding claims, **characterized in that** the values dZ, dT, and dL are calculated as factors, whereby absolute values are obtained by multiplying by the droplet diameter D.

8. Method according to claim 5 and claim 7, **characterized in that** $C = \frac{π}{6}$ holds true.

9. Method according to any one of the preceding claims, **characterized in that** the droplet diameter D
9.1 is a predetermined constant droplet diameter, or
9.2 is variable, or
9.3 is variably selected from a first droplet diameter and a second droplet diameter differing from the first droplet diameter.

10. Method according to claim 9, **characterized in**
**that** the layer thickness dZ is calculated as a function of the variable droplet diameter.

11. Method for the additive layer-by-layer fabrication of a component (12), which has a wall thickness that may vary over the height of the component, by applying a liquid material drop by drop using a printhead (16), the method comprising:
generating control data sets for layers (28) of the component (12) using a method according to any one of the preceding claims and controlling the printhead (16) using the generated control data sets.

12. Data processing device comprising means for performing the method according to any one of claims 1 through 10.

13. Computer program comprising instructions that, when the program is executed by a computer, cause the computer to perform the method according to any one of claims 1 through 10.

14. Computer-implemented controller (20) for an apparatus (10) for the additive manufacturing of a component (12), which comprises a print head (16) for applying liquid material drop by drop and a movement mechanism (18) for the relative movement of the print head (16) and the component (12) to be manufactured, wherein the controller (20) is configured to control the device (10) to carry out the method according to claim 11.

15. Apparatus (10) for the additive manufacturing of a component (12), comprising a print head (16) for applying liquid material drop by drop, a movement mechanism (18) for relative movement of the print head (16) and the component (12) to be manufactured, and a controller (20) configured to control the apparatus (10) to carry out the method according to claim 11.

## Revendications

1. Procédé mis en œuvre par ordinateur pour générer un jeu de données de commande destiné à commander une tête d'impression (16) lors de la fabrication additive goutte à goutte d'un composant (12), lequel présente une épaisseur de paroi pouvant varier sur la hauteur du composant, de sorte que chaque couche (28) du composant à fabriquer de manière additive présente une largeur de couche s, le jeu de données de commande contenant, pour chaque couche (28), un espacement entre les gouttes dT, selon lequel les gouttes sont éjectées le long de lignes lors de la fabrication additive goutte à goutte avec un diamètre de goutte D, un espacement entre les lignes dL, qui indique la distance entre les lignes, et une hauteur de couche dZ, **caractérisé par** les étapes suivantes:
a) calculer un nombre théorique xₜₕ de trajectoires à partir du quotient entre la largeur de couche s et un espacement de lignes de consigne prédéterminé dL_{O}, avec ${x}_{th} = \frac{s}{{dL}_{O}}$, puis arrondir la valeur xₜₕ au nombre naturel supérieur le plus proche pour obtenir un nombre arrondi à la hausse x_{auf}, et arrondir la valeur du quotient au nombre naturel inférieur le plus proche pour obtenir un nombre arrondi à la baisse x_{ab};
b) calculer un premier jeu de données comprenant l'espacement entre les lignes dL, l'espacement entre les gouttes dT et l'épaisseur de couche dZ sur la base du nombre arrondi vers le haut x_{auf},
c) calculer un deuxième jeu de données comprenant l'espacement entre les lignes dL, l'espacement entre les gouttes dT et l'épaisseur de couche dZ sur la base de la valeur arrondie vers le bas x_{ab} et
d) comparer les valeurs des premier et deuxième jeux de données à des valeurs de consigne dL_{O}, dT_{O} et dZ_{O} prédéterminées en fonction du composant, et sélectionner le premier ou le deuxième jeu de données comme jeu de données de commande sur la base de cette comparaison.

2. Procédé selon la revendication 1, **caractérisé en ce que**
l'espacement entre les lignes est calculé à l'aide de ${dL}_{suf} = \frac{s}{{x}_{suf}}$ où le suffixe suf signifie "auf" pour le premier jeu de données et "ab" pour le deuxième jeu de données.

3. Procédé selon la revendication 2, **caractérisé en ce que**
l'espacement entre les gouttes est calculé à l'aide de *dT_{suf}* = *kTL* - *dL_{suf}* où kTL est une constante prédéterminée.

4. Procédé selon l'une quelconque des revendications précédentes, **caractérisé en ce que**
l'épaisseur de couche dZ est une valeur constante prédéterminée.

5. Procédé selon la revendication 3, **caractérisé en ce que**
l'épaisseur de couche dZ est déterminée à partir de la relation *dZ_{suf}* × *dT_{suf}* × *dL_{suf}* = *C* où C est une constante prédéterminée.

6. Procédé selon l'une quelconque des revendications précédentes, **caractérisé en ce que**
l'étape d) comprend:
d1) la sélection de l'ensemble de données dont la somme des absolus des écarts par rapport aux valeurs de consigne prédéterminées est minimale.

7. Procédé selon l'une quelconque des revendications précédentes, **caractérisé en ce que**
les valeurs dZ, dT et dL sont calculées en tant que facteurs, les valeurs absolues étant obtenues par multiplication par le diamètre de goutte D.

8. Procédé selon la revendication 5 et selon la revendication 7, **caractérisé en ce que** $C = \frac{π}{6}$ s'applique.

9. Procédé selon l'une quelconque des revendications précédentes, **caractérisé en ce que**
le diamètre de goutte D
9.1 est un diamètre de goutte constant prédéterminé, ou
9.2 est variable, ou
9.3 est choisi de manière variable parmi un premier diamètre de goutte et un deuxième diamètre de goutte différent du premier diamètre de goutte.

10. Procédé selon la revendication 9, **caractérisé en ce que**
l'épaisseur de couche dZ est calculée en fonction du diamètre variable de goutte.

11. Procédé de fabrication additive par couches d'un composant (12), qui présente une épaisseur de paroi pouvant varier sur la hauteur du composant, par application goutte à goutte d'un matériau liquide au moyen d'une tête d'impression (16), le procédé comprenant:
la génération de jeux de données de commande pour les couches (28) du composant (12) au moyen d'un procédé selon l'une des revendications précédentes, et la commande de la tête d'impression (16) au moyen des jeux de données de commande générés.

12. Dispositif de traitement de données, comprenant des moyens pour mettre en œuvre le procédé selon l'une des revendications 1 à 10.

13. Programme informatique comprenant des instructions qui, lors de l'exécution du programme par un ordinateur, amènent celui-ci à mettre en œuvre le procédé selon l'une des revendications 1 à 10.

14. Système de commande (20) mis en œuvre par ordinateur pour un dispositif (10) de fabrication additive d'un composant (12), dispositif qui comporte une tête d'impression (16) destinée à déposer du matériau liquide goutte à goutte et un mécanisme de déplacement (18) destiné au déplacement relatif de la tête d'impression (16) et du composant (12) à fabriquer, le système de commande (20) étant conçu pour commander le dispositif (10) afin qu'il mette en œuvre le procédé selon la revendication 11.

15. Dispositif (10) destiné à la fabrication additive d'un composant (12), comprenant une tête d'impression (16) destinée à l'application goutte à goutte d'un matériau liquide, un mécanisme de déplacement (18) destiné au déplacement relatif de la tête d'impression (16) et de la pièce à fabriquer (12), et un système de commande (20) conçu pour piloter le dispositif (10) afin de mettre en œuvre le procédé selon la revendication 11.
